# EUROPÄISCHE PATENTANMELDUNG

(11) **EP 0 992 328 A2**
(43) Veröffentlichungstag der Anmeldung: **12.04.2000**
(21) Anmeldenummer: 99119489.5
(22) Anmeldetag: 30.09.1999
(51) Int. Cl.: B29B 9/06

(54) **Granuliervorrichtung**

(30) Priorität: 08.10.1998 DE 19846286
(71) Anmelder: Schelauske, Peter, Dipl.-Ing., 61350 Bad Homburg (DE)
(72) Erfinder: Schelauske, Peter, Dipl.-Ing., 61350 Bad Homburg (DE)
(74) Vertreter: Schulze Horn & Partner

(57) **Zusammenfassung**

Die vorliegende Erfindung betrifft eine Granuliervorrichtung mit einer Lochplatte (1), durch deren Löcher (2) jeweils ein Kunststoffstrang etwa axial in eine Fanghaube eintritt, wobei darin ein Messerkopf (3) mit einer axialen Welle anliegend an der Ausgangsseite der Lochplatte (1) rotiert und Messer (4) des Messerkopfes den austretenden Kunststoffstrang abtrennen, wobei die axiale Welle von einem Elektromotor antreibbar und in zwei getrennte Wellenabschnitte unterteilt ist, wovon der erste Wellenabschnitt (5) den Messerkopf (3) trägt, wovon der zweite Wellenabschnitt (6) die hohlgebohrte Antriebswelle des Elektromotors ist, wobei die beiden Wellenabschnitte (5, 6) durch einen elastischen Faltenbalg (7) zur Übertragung eines Drehmoments verbunden sind, und der Faltenbalg (7) zur axialen Verschiebung des Messerkopfes (3) durch eine Spreizvorrichtung spreizbar ist.

## Beschreibung

Die vorliegende Erfindung betrifft eine Granuliervorrichtung nach dem Oberbegriff des Patentanspruchs 1.

Granuliervorrichtungen werden für thermoplastische Kunststoffe und Elastomere eingesetzt, sowie für sogenannte "Hot melts", Wachse sowie spezielle Pharmazeutika und Lebensmittel.

Kunststoffe werden in Großanlagen in großen Mengen erzeugt. Ein hoher Anteil davon wird in kleineren Losen auf den speziellen Einsatzzweck hin modifiziert durch Zugabe von Additiven, Stabilisatoren, Gleitmitteln, Flammhemmern, Verstärkungsstoffen, Füllstoffen, Farben etc..

Dieser Schritt wird als "Compoundieren" bezeichnet bzw. bei Herstellung von hochkonzentrierten Mischungen, die nachfolgend zurückverschnitten werden zu niedrigerer Verarbeitungskonzentration, als "Herstellung von Masterbatch".

Die plastifizierbare Mischung wird in speziellen Extrudern aufgeschmolzen und durch die Pumpwirkung der Extruderschnecken oder nachgeschalteter Zahnradpumpe durch die Bohrungen einer Lochplatte gedrückt, wodurch Stränge entstehen, die durch Kühlung erstarren und dann zu kurzen Längen geschnitten werden, um ein Granulat zu erzeugen, das sicher vor Entmischung ist, staubfrei, leicht zu transportieren und zu dosieren.

Die Form der Granulate wird von den Stoffeigenschaften beeinflußt und von der Schnittgeschwindigkeit der Messer, d.h. Anzahl der Messer je Umlauf und Drehzahl. Bei niedriger Frequenz bilden sich zylindrische Granulate, mit steigender Frequenz werden sie runder bis linsenförmig. Asynchronmotoren mit Frequenzregelung überdecken dabei einen Drehzahlbereich von etwa 250/min bis 5000/min.

Bei größeren Durchsätzen (oberhalb 1000 kg/h) doch auch schon darunter werden bevorzugt nach dem Stand der Technik auf entsprechenden Halterungen (Messerträger) montierte Messer, üblich 2 bis 8, die direkt vor der Lochplatte rotieren und die austretenden, noch nicht völlig erstarrten Materialstränge zu Granulat schneiden. Diese Granuliervorrichtungen sind aus dem praktischen Betrieb bekannt.

Eine gattungsgemäße Granuliervorrichtung ist aus der US 4 728 276 bekannt. Hier handelt es sich um eine Unterwassergranuliervorrichtung, bei der die austretende Kunststoffmasse sofort von kühlendem Wasser überspült wird. Die zentrale Antriebswelle, die vorne den Messerkopf trägt und an dem anderen Ende einen Elektromotor, ist in ihrem Verlauf durch eine Zahnradkupplung verbunden, die so aufgebaut ist, daß die beiden Wellenenden jeweils eine in axialer Richtung verlaufende Verzahnung und eine darüber verlaufende ebenfalls verzahnte Mutter tragen, so daß Entfernungsänderungen zwischen den beiden Wellenenden überbrückbar sind. Die Zustellung zum Messerkopf hin erfolgt über eine Gewindestelleinrichtung.

Es ist ein Nachteil dieser bekannten Vorrichtung, daß sie eine genaue Ausrichtung einer relativ langen Anordnung erfordert, um Verschleiß zu vermeiden.

Bei einer Granuliervorrichtung für plastische Kunststoffmassen nach der DE 41 16 933 A1 sind der Düsenplatte eines Granulierkopfes Schneidmesser einer Schneideinrichtung vorgeordnet, wobei die mit dem Wellenzapfen einer Antriebsvorrichtung fluchtende Schneidwelle in einem Gehäuse drehantreibbar gelagert und das Gehäuse im Abstand zur Antriebsvorrichtung fest mit dieser verbunden ist, und eine Axialverstellung der Schneidwelle über eine elastische Kupplung ermöglicht ist. Zum Erhalt einer planparallelen und zentrischen Lage der Schneidmesser zur Düsenplatte entgegen einer thermischen Verlagerung sind dabei das Gehäuse und die Antriebsvorrichtung gemeinsam in mit dem Granulierkopf verbundenen und über eine Stütze horizontal verankerten Holmen verschiebbar geführt.

Es ist die Aufgabe der vorliegenden Erfindung, eine gattungsgemäße Granuliervorrichtung derart weiterzuentwickeln, daß geringe Abweichungen in der Justierung zwischen Messerkopf und Antriebsmotor sowohl in winkliger als auch in seitlicher Richtung kompensiert werden.

Die Lösung der Aufgabe erfolgt mit einer gattungsgemäßen Granuliervorrichtung mit den kennzeichnenden Merkmalen des Patentanspruchs 1.

Dadurch, daß die axiale Welle in zwei getrennte Wellenabschnitte unterteilt ist, wovon der erste Wellenabschnitt den Messerkopf trägt, wovon der zweite Wellenabschnitt die hohlgebohrte Antriebswelle des Elektromotors ist, wobei die beiden Wellenabschnitte durch einen elastischen Faltenbalg zur Übertragung eines Drehmoments verbunden sind, und daß der Faltenbalg zur axialen Verschiebung des Messerkopfes durch eine Spreizvorrichtung spreizbar ist, wird die vorteilhafte Wirkung erzielt, daß mit einfachen Mitteln eine Drehmomentübertragung auch bei nichtkoaxialer Ausrichtung der beiden Wellenabschnitt möglich ist, und daß weiter eine Zustellung des Messerkopfes zur Lochplatte hin erfolgen kann.

In einer ersten Ausgestaltung wird die Spreizvorrichtung dadurch gebildet, daß eine Pumpe eine Hydraulikflüssigkeit durch die axiale Bohrung im zweiten Wellenabschnitt in den Faltenbalg drückt und diesen damit vorwiegend in axialer Richtung ausweitet.

Als Alternative kann statt der Hydraulikflüssigkeit auch ein Gas, vorzugsweise Luft, eingesetzt werden.

Eine weitere Alternative liegt darin, daß die Spreizvorrichtung ein Federelement, vorzugsweise eine Schraubenfeder aufweist, die zwischen den beiden Wellenabschnitten angeordnet ist.

Durch die Spreizung wird ein Weg von etwa 7 mm überstrichen, was etwa den praktischen Notwendigkeiten durch Verschleiß der Messer entspricht.

Bei der letztgenannten Ausgestaltung ist die Ausführung der Granuliervorrichtung besonders kompakt. Die Federkraft ist über eine Gewindeeinstellung am Ende einer in der hohlgebohrten Welle liegenden Stange einstellbar.

Als noch weitere Alternative ist vorgesehen, daß die Spreizvorrichtung eine Stange aufweist, die in einer axialen Bohrung des zweiten Wellenabschnitts geführt ist und sich gegen den ersten Wellenabschnitt abstützt, und an ihrem anderen Ende gegen ein Federelement, vorzugsweise eine Schraubenfeder anliegt, das in einer am Gehäuse des Elektromotors befestigten Laterne axial verstellbar gehalten ist, wobei zwischen Federelement und Wellenende ein Drucklager angeordnet ist. Bei dieser Ausgestaltung dreht das Federelement nicht mit, und die Kraft ist durch die axiale Verstellbarkeit, z.B. mit Hilfe einer Gewindemutter, einstellbar.

Als Alternative zu der letztgenannten Spreizvorrichtung ist anstelle eines Federelements und der Gewindeverstellung auch ein weiterer Faltenbalg oder eine Kolben-Zylinder-Anordnung ausführbar, bei der ein Fluid in den Faltenbalg oder in die Kolben-Zylinder-Anordnung gepumpt wird und damit einen Druck und eine axiale Kraft ausübt.

Eine noch weitere alternative Ausgestaltung der Spreizvorrichtung sieht vor, daß der weitere Faltenbalg mit einer Flüssigkeit gefüllt ist, die bei Anliegen einer Gleichspannung ein Gas abspaltet, wobei die Stromzufuhr an den Faltenbalg geführt wird. Dieses System, wobei eine Spannung einen elektrochemischen Prozeß auslöst, der reversibel ist, wird unter der Bezeichnung "elektrochemischer Aktor" von der Firma FRIWO Silberkraft, Duisburg, angeboten.

Es ist auch möglich, dieses elektrochemische System für den Faltenbalg zwischen dem ersten und zweiten Wellenabschnitt anzuwenden, wobei hier die Spannung über Schleifringe zugeführt werden muß, wozu die Leitungen vorzugsweise durch die Wellenbohrung zum hinteren Wellenende durchgeführt wird, wo Schleifringe anzuordnen sind.

Um eine sicherere Führung des Messerkopfes an der Lochplatte zu erreichen, ist als weitere Ausgestaltung vorgesehen, daß der erste Wellenabschnitt axial verschiebbar auf einem Achsstummel drehbar gelagert ist, der fest mit der Lochplatte verbunden ist.

Der Werkstoff des Faltenbalgs ist zweckmäßig ein Elastomer oder ein Metall, wobei die Wandung bei der Metallausführung dünn ist, um die Flexibilität, insbesondere bei lateraler und winkliger Abweichung zu gewährleisten.

Die Anpreßkraft der Messer kann in etwa vom Federweg auf einer Skala abgelesen werden oder hergeleitet werden vom Druck, mit dein das Balgelement beaufschlagt wird. Es ist bevorzugt vorgesehen, die Stromaufnahme des Antriebsmotors als Maßstab für die Anpreßkraft zu benutzen, wobei diese durch Gewindenachstellung von Hand, über Stellmotoren oder eine automatisierte Anpassung über Hydraulik, Druckluft oder den elektrochemischen Aktor gesteuert werden kann.

Die erfindungsgemäße Granuliervorrichtung ist über einen weiten Bereich einsetzbar. Sie ist zunächst für Heißabschlaggranulatoren (luftgekühlt) einsetzbar, bei denen die Messer zentrisch oder exzentrisch zur Lochplattenachse rotieren und die Granulate in eine Fanghaube schleudem, aus der sie im Luftstrom pneumatisch abgeführt werden, oder in einem Wasserstrom.

Zum anderen ist die Erfindung für Wasserringgranulatoren ausführbar, bei denen in einer Schneidkammer die Granulate nach kurzem Luftweg in einen in die Schneidkammer tangential eintretenden, dann schraubenförmig unter Zentrifugalkraft rotierenden Wasserring eintauchen und mit dem Wasser abgeführt werden. Solche Wasserringgranulatoren können vertikal, d.h. mit aus liegender Lochplatte senkrecht nach unten austretenden Strängen ausgeführt sein, oder horizontal in Achse mit dem Extruder, mit waagerechter Strangaustrittsrichtung.

Zum dritten kann die erfindungsgemäße Granuliervorrichtung in Unterwassergranulierungen eingesetzt werden, bei denen die Schneidkammer trotz höherem Wasserdurchsatz kleiner ist als die Wasserringkammer, in der das über Rohrleitungen zugeführte und abgeführte Wasser die gesamte Kammer füllt und auch die Lochplatte netzt und damit kühlt. Das Wasser strömt dabei unregelmäßig durch die von Messerträger und Messern angefachte Wirbelströmung, die sich mit der Strömung vom Eintritt zum Austritt vermischt.

Im Falle der Wassergranulation ist am Ende der Schneidkammer zum Antriebsmotor hin eine Dichtung vorzusehen und vor dem Motorflansch eine Dränageplatte anzuordnen, die eventuell durchtretendes Leckwasser ablaufen läßt, bevor es die Motorwellendichtung und die Motorlagerung erreicht.

Für die Dichtung genügt im Falle der Wasserringgranulierung eine Lippendichtung, während bei der Unterwassergranulierung gegen 4 bis 6 bar Wasserdruck abzudichten ist, so daß hier vorteilhaft Gleitringdichtungen eingesetzt werden.

Vorteilhafte Ausgestaltungen der Erfindung werden nunmehr anhand einer Zeichnung näher erläutert. Sie zeigt in
- Figur 1: einen Ausschnitt einer vereinfachten Seitenansicht, in
- Figur 2: eine ebensolche Ansicht einer anderen Ausgestaltung, in
- Figur 3: eine ebensolche Ansicht in einer weiteren Ausgestaltung, und in
- Figur 4: eine ebensolche Ansicht in einer noch weiteren Ausgestaltung.

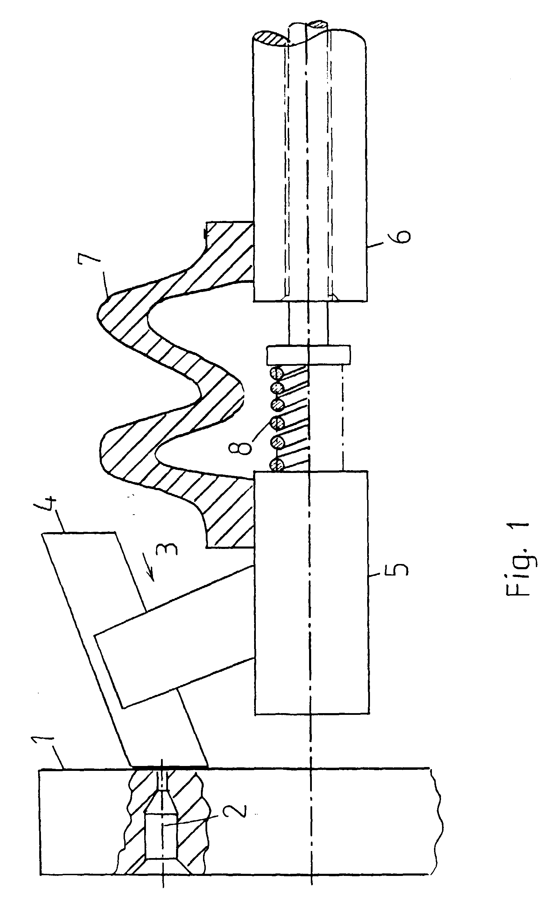

Mit Bezugnahme auf Figur 1 ist auf der linken Seite ausschnittsweise eine Lochplatte 1 dargestellt, in der eine Vielzahl von Löchern 2 angebracht ist, wovon nur eines dargestellt ist. Um eine strichpunktiert gezeichnete Drehachse rotiert ein Messerkopf 3 mit einer Vielzahl von Messern 4, wovon ebenfalls nur eines dargestellt ist. Der Messerkopf 3 ist auf einem ersten Wellenabschnitt 5 angebracht. Etwa koaxial mit dem ersten Wellenabschnitt 5 ist rechts in der Figur 1 ein hohlgebohrter zweiter Wellenabschnitt 6 dargestellt, der zur rechten Seite hin zu einem nicht dargestellten Elektromotor in Flanschausführung führt, wobei auch ein Fußmotor ausführbar ist.

Zwischen den beiden Wellenabschnitten 5 und 6 ist eine Schraubenfeder 8 angeordnet, die sich auf beiden Seiten gegen die Wellenstummel abstützt.

Als Verbindung zwischen den ersten Wellenabschnitt 5 und den zweiten Wellenabschnitt 6 dient ein Faltenbalg 7, von dem die obere Hälfte im Schnitt dargestellt ist. Es versteht sich, daß dieser Faltenbalg 7 rotationssymmetrisch ist. Seine Verbindung mit dem ersten und zweiten Wellenabschnitt kann durch Aufvulkanisieren erzeugt werden, durch Kleben, oder auch durch Aufklemmen mit einem Spannring oder anderen mechanische Befestigungsarten, solange eine Übertragung des Drehmoments für den Messerkopf dabei möglich ist.

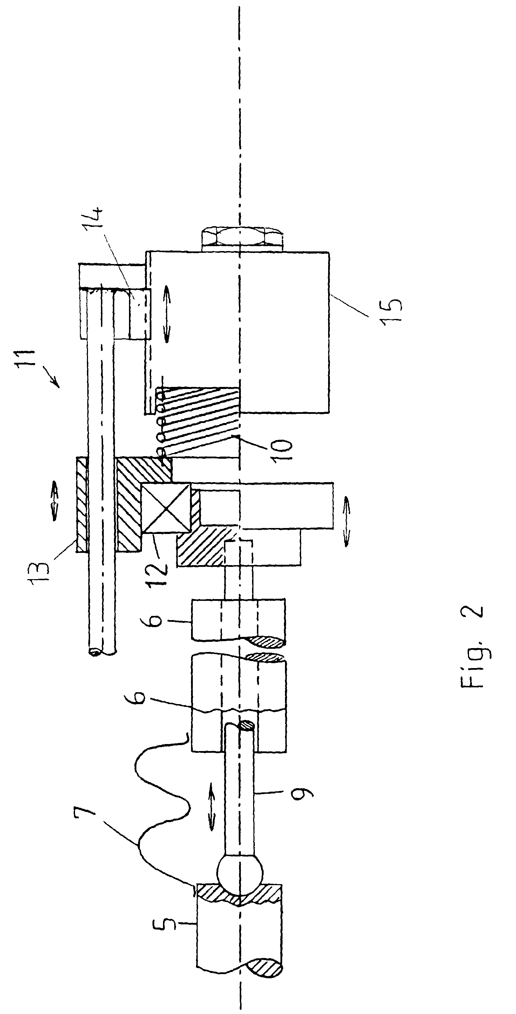

Figur 2 zeigt eine andere Ausgestaltung, wobei auf der linken Seite der Figur 2 der erste Wellenabschnitt 5 sichtbar ist, wobei der Messerkopf und der übrige Teil der Vorrichtung nicht dargestellt sind, weil sie der Figur 1 entsprechen. Der zweite Wellenabschnitt 6 ist unterbrochen gezeichnet, wobei in der Unterbrechung der Elektromotor angeordnet ist, der ebenfalls aus Vereinfachungsgründen nicht dargestellt ist, da er bis auf die Bohrung einer üblichen Ausführung entspricht. Dieser zweite Wellenabschnitt 6 ist mit einer axialen Durchgangsbohrung ausgeführt, in der sich eine Stange 9 axial verschiebbar befindet. Die Stange 9 stützt sich mit ihren linken Ende gegen den ersten Wellenabschnitt 5 ab.

Die beiden Wellenabschnitte 5 und 6 sind wie bei Figur 1 durch einen Faltenbalg 7 miteinander verbunden. Die Stange 9 ragt rechts aus dem zweiten Wellenabschnitt 6 heraus und trägt einen rotationssymmetrischen Ansatz, der sich über ein Drucklager 12 auf ein ringförmiges Teil abstützt, welches eine Anzahl Bohrungen aufweist, von denen die obere dargestellt ist.

Durch die Bohrung kann ein Führungsstück 13 sich auf einer Führungsstange bewegen, die links am Gehäuse des nicht gezeichneten Elektromotors befestigt ist und rechts eine Haltevorrichtung 14 in Ringform mit Innengewinde trägt, in die ein Gewindestopfen 15 einschraubbar ist. Zwischen diesem Gewindestopfen 15 und dem linken ringförmigen Träger befindet sich eine Feder 10, die über die Stange 9 einen Druck auf den ersten Wellenabschnitt 5 ausübt. Dieser Druck ist über die Gewindeeinstellung auf der rechten Seite der Figur 2 einstellbar. Der rechte Teil mit der Führungsstange (effektiv 2 bis 4 Stück) und der Gewindeeinstellung ist als Laterne 11 gekennzeichnet.

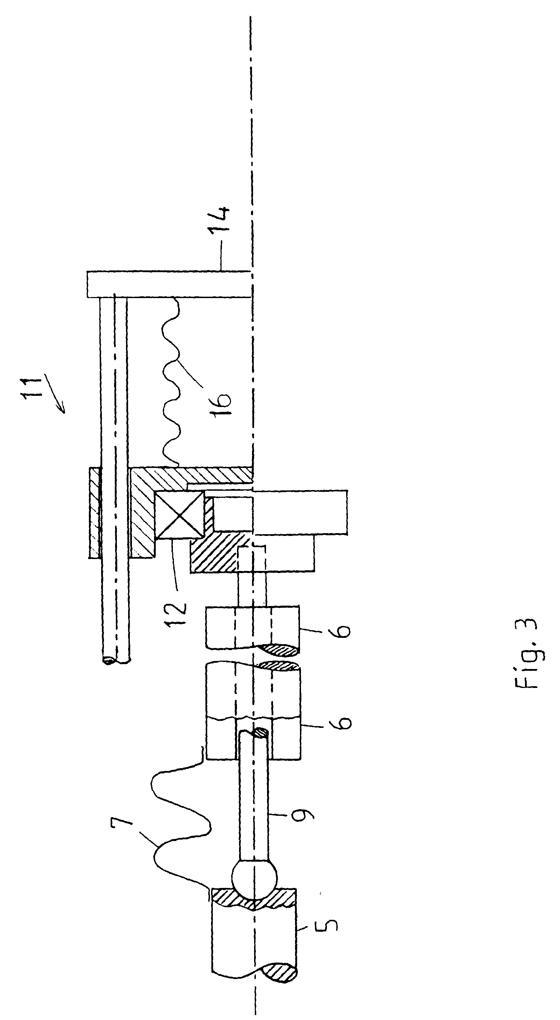

Figur 3 zeigt eine ähnliche Ausgestaltung wie Figur 2, wobei sich die im linken Teil der Figur aufgezeigten Elemente nicht gegenüber Figur 2 ändern. In der rechten Seite ist statt einer Schraubenfeder 10 ein weiterer Faltenbalg 16 angeordnet, der sich auf der linken Seite gegen eine verschiebliche Platte abstützt und auf der rechten Seite gegen eine Endplatte 14. Durch nicht dargestellte Durchbrüche in der Endplatte 14 kann ein Fluid in den Innenraum des weiteren Faltenbalgs 16 gedrückt werden, wobei dieses Fluid Hydrauliköl oder Luft sein kann. Der Druck ist in diesem Fall ein Maßstab für die Kraft, die auf die Stange 9 ausgeübt wird.

Auch kann der Innenraum in dem weiteren Faltenbalg 16 mit einer Flüssigkeit gefüllt sein, die unter Einfluß von Gleichstrom ein Gas abspaltet.

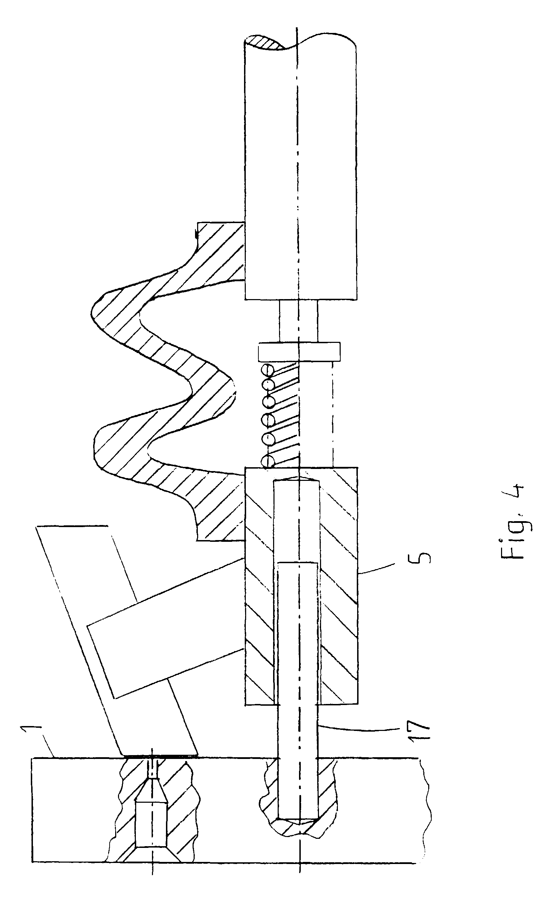

Schließlich zeigt die Figur 4 eine Ausgestaltung, die etwa der Figur 1 entspricht, wobei jedoch der erste Wellenabschnitt 5 eine Sackbohrung aufweist, die zur Lochplatte 1 hin offen ist. In diese Lochbohrung ragt ein Achsstummel 17, der fest mit der Lochplatte 1 verbunden ist. Es ist möglich, wenn auch nicht gezeichnet, den Achsstummel 17 in dem ersten Wellenabschnitt 5 durch Gleitlager oder Wälzlager, vorzugsweise Nadellager abzu

## Patentansprüche

1. Granuliervorrichtung mit einer Lochplatte (1), durch deren Löcher (2) jeweils ein Kunststoffstrang etwa axial in eine Fanghaube eintritt, wobei darin ein Messerkopf (3) mit einer axialen Welle anliegend an der Ausgangsseite der Lochplatte (1) rotiert und Messer (4) des Messerkopfes den austretenden Kunststoffstrang abtrennen, wobei die axiale Welle von einem Elektromotor antreibbar und in zwei getrennte Wellenabschnitte unterteilt ist, wovon der erste Wellenabschnitt (5) den Messerkopf (3) trägt, wovon der zweite Wellenabschnitt (6) die hohlgebohrte Antriebswelle des Elektromotors ist, wobei die beiden Wellenabschnitte (5, 6) durch einen elastischen Faltenbalg (7) zur Übertragung eines Drehmoments verbunden sind, und der Faltenbalg (7) zur axialen Verschiebung des Messerkopfes (3) durch eine Spreizvorrichtung spreizbar ist.

2. Granuliervorrichtung nach Anspruch 1, dadurch gekennzeichnet, daß eine Hydraulikflüssigkeit durch die axiale Bohrung im zweiten Wellenabschnitt (6) in den Faltenbalg (7) unter Druck einführbar ist.

3. Granuliervorrichtung nach Anspruch 1, dadurch gekennzeichnet, daß in die Spreizvorrichtung ein Gas, vorzugsweise Luft, durch die axiale Bohrung im zweiten Wellenabschnitt (6) in den Faltenbalg (7) unter Druck einführbar ist.

4. Granuliervorrichtung nach Anspruch 1, dadurch gekennzeichnet, daß der Faltenbalg (7) hermetisch dicht ist und eine Flüssigkeit enthält, die zur Spreizung des Faltenbalges durch Zufuhr elektrischen Stroms mehr oder minder in Gasform überführt wird und dadurch reversibel einen Innendruck aufbaut.

5. Granuliervorrichtung nach Anspruch 1, dadurch gekennzeichnet, daß die Spreizvorrichtung ein Federelement, vorzugsweise eine Schraubenfeder (8) aufweist, die zwischen den beiden Wellenabschnitten (5, 6) angeordnet ist.

6. Granuliervorrichtung nach Anspruch 1, dadurch gekennzeichnet, daß die Spreizvorrichtung eine Stange (9) aufweist, die in der axialen Bohrung des zweiten Wellenabschnitts (6) geführt ist und an ihrem einen Ende gegen ein Federelement, vorzugsweise eine Schraubenfeder (10) anliegt, das in einer am Gehäuse des Elektromotors befestigten Laterne (11) axial verstellbar gehalten ist, wobei zwischen Federelement und dem Ende der Stange (9) ein Drucklager (12) angeordnet ist.

7. Granuliervorrichtung nach Anspruch 1, dadurch gekennzeichnet, daß die Spreizvorrichtung eine Stange (9) aufweist, die in der axialen Bohrung des zweiten Wellenabschnitts (6) geführt ist und an ihrem anderen Ende gegen einen weiteren Faltenbalg (16) oder eine Kolben-Zylinder-Anordnung anliegt, der in einer am Gehäuse des Elektromotors befestigten Laterne (11) axial verstellbar gehalten ist, wobei zwischen Federelement und Wellenende ein Drucklager (12) angeordnet ist, wobei der weitere Faltenbalg (16) oder die Kolben-Zylinder-Anordnung durch eine Hydraulikflüssigkeit spreizbar ist, die eine Pumpe in den weiteren Faltenbalg (16) drückt.

8. Granuliervorrichtung nach Anspruch 1, dadurch gekennzeichnet, daß die Spreizvorrichtung eine Stange (9) aufweist, die in einer axialen Bohrung des zweiten Wellenabschnitts (6) geführt ist und an ihrem einen Ende gegen einen weiteren Faltenbalg (16) oder eine Kolben-Zylinder-Anordnung anliegt, der in einer am Gehäuse des Elektromotors befestigten Laterne (11) axial verstellbar gehalten ist, wobei zwischen Federelement und Wellenende ein Drucklager (12) angeordnet ist, wobei der weitere Faltenbalg (16) oder die Kolben-Zylinder-Anordnung durch ein Gas, vorzugsweise Luft spreizbar ist, das ein Verdichter in den weiteren Faltenbalg (16) drückt.

9. Granuliervorrichtung nach Anspruch 1, dadurch gekennzeichnet, daß die Spreizvorrichtung eine Stange (9) aufweist, die in einer axialen Bohrung des zweiten Wellenabschnitts (6) geführt ist und an ihrem einen Ende gegen einen weiteren Faltenbalg (16) oder eine Kolben-Zylinder-Anordnung anliegt, der in einer am Gehäuse des Elektromotors befestigten Laterne (11) axial verstellbar gehalten ist, wobei zwischen Federelement und Wellenende ein Drucklager (12) angeordnet ist, wobei der weitere Faltenbalg (16) oder die Kolben-Zylinder-Anordnung mit einer Flüssigkeit gefüllt ist, die bei Anlegen einer Gleichspannung ein Gas abspaltet.

10. Granuliervorrichtung nach einem der vorhergehenden Ansprüche, dadurch gekennzeichnet, daß der erste Wellenabschnitt (5) axial verschiebbar auf einem Achsstummel (17) drehbar gelagert ist, der fest mit der Lochplatte (1) verbunden ist.

11. Granuliervorrichtung nach einem der Ansprüche 8 bis 10, dadurch gekennzeichnet, daß die Stromaufnahme des Elektromotors ein Signal für die Regelung der Spreizung gibt, z.B. an einen elektrischen Schrittmotor, der am freien Ende des Elektromotors angeordnet ist und mit der Stange (9) verbunden ist, die durch die axiale Bohrung des zweiten Wellenabschnitts (6) geführt ist oder daß das Signal den hydraulischen oder pneumatischen Druck regelt.

12. Granuliervorrichtung nach einem der vorhergehenden Ansprüche, dadurch gekennzeichnet, daß der Werkstoff des Faltenbalgs (7, 13) ein Elastomer oder ein Metall ist.
